# EUROPÄISCHE PATENTSCHRIFT

(11) **EP 3 147 627 B1**
(45) Veröffentlichungstag und Bekanntmachung des Hinweises auf die Patenterteilung: **26.04.2023**
(21) Anmeldenummer: 15186221.6
(22) Anmeldetag: 22.09.2015
(51) Int. Cl.: G01B 21/04, B23Q 17/22, B23Q 17/24, G01B 11/00, G01B 5/008

(54) **OPTISCHE MESSTASTER-KALIBRATION**
OPTICAL MEASURING PROBE CALIBRATION
ÉTALONNAGE DE PALPEUR OPTIQUE

(43) Veröffentlichungstag der Anmeldung: 29.03.2017
(73) Patentinhaber: GF Machining Solutions AG, 2504 Biel/Bienne (CH)
(72) Erfinder: Besuchet, Jean-Philippe, 2000 Neuchatel (CH); Monsch, Michael, 3270 Aarberg (CH)
(74) Vertreter: Li Schrag, Yue

(56) Entgegenhaltungen:
- EP-A2- 0 420 416
- EP-A2- 0 965 816
- EP-B1- 2 203 273

## Beschreibung

Die vorliegende Erfindung betrifft eine Kalibrationsvorrichtung für Messtaster gemäss dem Oberbegriff von Anspruch 1, ein damit ausgerüstetes Koordinatenmesssystem, sowie ein Messverfahren für das Koordinatenmesssystem gemäss den weiteren Ansprüchen 4 und 7.

Kalibrationsvorrichtungen für taktile Messtaster gemäss dem Oberbegriff von Anspruch 1 sowie die Messtaster selbst sind heute Stand der Technik.

In Werkzeugmaschinen dient der Einsatz von Messtastern beispielsweise dazu die Position und ev. auch die Ausrichtung von auf dem Werkzeugtisch eingespannten Werkstücken genau zu bestimmen bzw. zu vermessen. Auf diese Weise wird sichergestellt, dass die Werkzeugmaschinensteuerung, z.B. einer CNC-Maschinen, einerseits eingespannte Werkstücke genau nach Vorgabe bearbeitet, z.B. fräst, und andererseits dabei verhindert wird, dass das Werkzeug, z.B. Fräskopf, unbeabsichtigt in das Werkstück hineinfährt und damit die Werkzeugmaschine beschädigt. Die taktilen Messtaster zur Positionsbestimmung werden in der Regel nur bei Bedarf in Werkzeugmaschine eingebaut, z.B. für das Vermessen des eingespannten Werkstückes auf dem Arbeitstisch der Werkzeugmaschine. Der Messtaster ist dabei Teil eines Koordinatenmesssystems, welches in der Regel mit der Maschinensteuerung der Werkzeugmaschine verbunden ist und die vom Messtaster erfassten Messpunkte der Werkzeugmaschine übermittelt. Der Messtaster wird hierfür im Normalfall an seiner Basis in das Spannfutter des bewegbaren Maschinenkopfes eingespannt, d.h. anstelle eines Werkzeuges. Damit wird sichergestellt, dass die Messungen in direktem Bezug zum Werkzeugkopf der Werkzeugmaschine stattfinden. Der taktile Messtaster besitzt an seinem anderen Ende ein auslenkbares Tastelement, welches meist kugel- oder kalottenförmig ausgeführt ist. Das Tastelement besitzt eine genau definierte Tastoberfläche, welche für eine Positionsmessung mit dem zu messenden Gegenstand - punktförmig - in Berührung kommen muss. Damit eine schadenfreie Berührung des Tastelementes am Messtaster mit dem zu messenden Gegenstand überhaupt festgestellt werden kann, ist der Messtaster mit einem elektromechanischen Sensor ausgestattet. Dieser Sensor arbeitet wie ein kleines Federelement. Bei Berührung des auslenkbaren Tastelementes an der Spitze des Messtasters mit einem Gegenstand wird der Messtaster längs seiner Längsachse nach um eine Tastauslenkung I - federnd und reversiv - zusammengedrückt. Erreicht diese Tastauslenkung einen bestimmten Schwellwert l_{Tr} (Triggerwert z.B. im Bereich von 4-30 µm) so löst der Messtaster bzw. sein Sensor ein elektrisches Signal aus, welches die Berührung bzw. Stauchung des Messtasters signalisiert und z.B. eine weitere Bewegung des Maschinekopfes verhindert. Da die Geometrie des Messtasters - insbesondere die Geometrie der Tastoberfläche an seinem Tastelement und die Länge des Messtasters - nach einer Kalibration an der Werkzeugmaschine genau definiert und bekannt sind, kann aufgrund der der Maschinensteuerung bekannten Position des Werkzeugkopfes bzw. Spannfutters die relative Position eines gemessenen Punktes - z.B. am eingespannten Werkstück - genau bestimmt und z.B. mit der Maschinensteuerung der Werkzeugmaschine erfasst werden. Da heutige Werkzeugmaschinen hochpräzis sind, muss bei dieser Positionsbestimmung auch der Tastauslenkung I_{Tr} des Messtasters Rechnung getragen werden. Dies erfolgt bei der Kalibrierung des taktilen Messtasters.

Für eine genaue Positionsmessung mit einem Messtaster schlägt die Schrift WO 98/57121 beispielsweise vor, die Position des Tastelementes am Messtaster mit einem optischen Sensor direkt zu erfassen, wodurch Tastauslenkung oder allenfalls auftretende Verformungen des in der Regel stiftförmigen Messtaster die Positionsmessung nicht verfälschen können.

Eine derartige Vorrichtung hat sich in der Praxis jedoch als nicht immer zuverlässig erwiesen, weil der optische Sensor in bestimmten Fällen - z.B. bei Verschmutzungen - das Tastelement gar nicht korrekt erfassen kann. Die Vorrichtung ist zudem vergleichsweise komplex, weil der Messtaster und der zusätzliche optische Sensor mit dem Messtaster bewegt werden muss. Zudem gibt es Anwendungsfälle, bei welchen das Tastelement bei einer Messung nicht im Sichtbereich des optischen Sensors gehalten werden kann. Soll beispielsweise die Tiefe einer Bohrung gemessen werden, so kann der optische Sensor das in der Bohrung versenkte Tastelement nicht erfassen und folglich keine Messung durchführen. Die Anwendbarkeit einer solchen Messvorrichtung ist folglich vergleichsweise beschränkt.

Die WO 94/08205 beschreibt eine ähnliche Vorrichtung, bei welcher das mechanische Tastelement mittels Videokamera an die zu vermessende Stelle gefahren wird.

Eine weitere Kalibriervorrichtung für bewegbare Vorrichtungen wird in der DE 100 27 106 A1 beschrieben.

Die EP 2 203 273 B1 von der Firma Conoptica offenbart eine Messvorrichtung mit welcher rotierende Werkzeuge vermessen werden können. Hierbei beschreibt die Schrift in seinen Absätzen [105] bis [107] aber auch die Möglichkeit, mit derselben Vermessungsvorrichtung die oben beschriebenen taktilen Messtaster zu vermessen. Hierfür werden Messtaster im Spannfutter des Werkzeugkopfes eingespannt und in eine beispielsweise neben dem Maschinentisch positionierte Messvorrichtung vermessen (siehe Absatz [106] und Figuren 6a und 7a). Die Messvorrichtung besitzt hierfür einen optischen Detektor und ein pneumatisches Stäbchen an welchem ein Glaskubus mit einem Bezugsmuster befestigt ist. Der Glaskubus wird zunächst ins Sichtfeld des optischen Detektors gebracht. Der Detektor kann anhand des am Glaskubus angebrachten Bezugsmusters die genaue Position des Glaskubus bzw. seiner Oberfläche detektieren. Anschliessend fährt der Werkzeugkopf die Spitze des Messtasters gegen den Glaskubus bis der taktile Messtaster eine Berührung signalisiert und die weitere Bewegung des Maschinenkopfes stoppt. Aufgrund der bekannten Position der Basis des Messtasters im Spannfutter und der berührten Referenzfläche auf dem Glaskubus, kann die Messvorrichtung die Länge des Messtaster im getriggerten bzw. berührenden Zustand, sowie die eigentliche Tastauslenkung l_{Tr} des Messtasters ermitteln und damit den Messtaster kalibrieren. Wird der Messtaster zu einem späteren Zeitpunkt erneut im Werkzeugkopf eingesetzt, so kann die Kalibration schneller vollzogen werden. Hierzu wird die kugelförmige Spitze des Messtasters erneut in das Sichtfeld des optischen Detektors gebracht, die Position bzw. die Koordinaten der kugelförmigen Spitze werden optisch ermittelt und mit der abgespeicherten Tastauslenkung l_{Tr} des Messtasters kompensiert. Daraus ergibt sich die effektive Position, welche die kugelförmige Spitze in getriggertem, d.h. einen Messpunkt berührendem Zustand einnimmt. Der erneut eingesetzte Messtaster ist damit bereits kalibriert und bereit für neue Positionsmessungen.

Obschon die Messvorrichtung der EP 2 203 273 B1 gute Messresultate liefert, ist die Verwendung des Glaskubus für die Tastauslenkungsmessung I_{Tr} im praktischen Einsatz sehr aufwendig und folglich verbesserungsbedürftig, denn der Glaskubus muss für die Tastauslenkungsmessung l_{Tr} extra mit einem transparentes Glasplättchen versehen und gefroren werden (zwecks Erzeugung des Bezugsmusters, siehe Ende von Absatz [107]). Zudem muss der Glaskubus und seine Referenzfläche (welche den Messtaster berührt) hochpräzise hergestellt sein, damit dieser eine sehr genaue Messung erlaubt. Die Konstruktion ist folglich vergleichsweise komplex und damit teuer.

Der vorliegenden Erfindung liegt daher die Aufgabe zugrunde, eine Kalibrationsvorrichtung für die Messung der signalauslösenden Tastauslenkung l_{Tr} von taktilen Messtastern vorzusehen, welche die Nachteile der bestehenden Vorrichtungen beseitigt und insbesondere eine einfachere Konstruktion aufweist.

Diese Aufgabe wird durch eine Kalibrationsvorrichtung gemäss Anspruch 1 gelöst. Die Erfindung umfasst ebenso ein Messverfahren gemäss Anspruch 7.

Der Vorteil der erfindungsgemässen Kalibrationsvorrichtung liegt darin, dass weder das Referenzelement noch deren Referenzfläche hochpräzise gefertigt oder positioniert werden müssen. Die Referenzfläche muss nicht mal im Sichtfeld des Detektors liegen. Sie dient lediglich der Auslenkung des Tastelementes, und wird nicht - im Gegensatz zu den bekannten Vorrichtungen des Standes der Technik - zur Positionsbestimmung benötigt. Der Detektor der Kalibrationsvorrichtung muss vom Messtaster lediglich einen Teil der Tastoberfläche des ausgelenkten Tastelementes erfassen können, damit es zusammen mit der Recheneinheit die genaue Position des Tastelementes errechnen kann. Der Detektor kann z.B. eine kamerabasiertes oder auch ein handelsübliches laserbasiertes Werkzeugvermessungsgerät sein (z.B. vom Hersteller Blum Novotec, Renishaw oder Hexagon M&H). Die Kalibration erfolgt alleine anhand der Positionserkennung des - in der Anwendung um den Betrag l_{Tr} ausgelenkten - Tastelementes. Es werden folglich keine hochpräzise gefertigten oder hochpräzis positionierten Referenzobjekte (wie Flächen oder Glaskubuse) benötigt. Nicht einmal die Position der Referenzfläche muss genau bestimmt sein. So lange der Detektor einen Teil der Tastoberfläche erfasst (in belasteter oder unbelasteter Position), kann die Position des Tastelementes genau bestimmt werden. Die erfindungsgemässen Kalibrationsvorrichtung ist vergleichsweise einfach aufgebaut und folglich günstiger herzustellen, vor allem aber ist sie wesentlich einfacher anzuwenden.

Für die Variante mit beispielsweise einem laserbasierten Detektor wird bevorzugt ein Messtaster mit einer laser-messbaren Tastoberfläche benutzt (z.B. aus Keramik statt aus dem üblichen Saphire-Glas).

Im Folgenden wird die erfindungsgemässe Vorrichtung nun anhand von schematischen Figuren und Beispielen erläutert. Es zeigen:
- Figur 1: Beispiel einer erfindungsgemässen Kalibrationsvorrichtung
- Figur 2: Detailansicht eines taktilen Messtasters
- Figur 3: Taktiler Messtaster von Figur 2 mit kleinerem Detektor-Sichtfeld
- Figur 4: Taktiler Messtaster mit seitlicher Auslenkung des Tastelementes

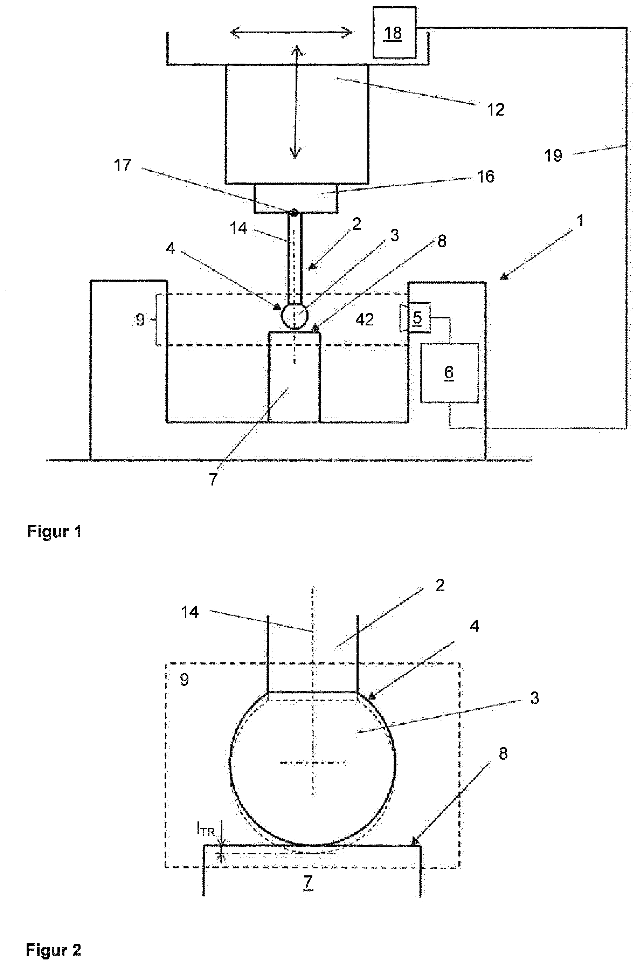

Zur Messung der Tastauslenkung I_{Tr} wird die erfindungsgemässe Kalibrationsvorrichtung zusammen mit einem taktilen Messtaster als Koordinatenmesssystem in einer Werkzeugmaschine eingebaut und mit der Werkzeugmaschinensteuerung verbunden. Eine solche Anordnung wird in der Figur 1 gezeigt. Der taktile Messtaster 2 wird zunächst im Spannfutter 16 des bewegbaren Werkzeugkopfes 12 eingespannt. In einem ersten Schritt wird der Werkzeugkopf 12 zur erfindungsgemässen Kalibrationsvorrichtung 1 bewegt, so dass das auslenkbare Tastelement 3 bzw. die Spitze des taktilen Messtasters 2 in das Sichtfeld 9 des Detektors 5 gelangt ohne einen anderen Gegenstand (z.B. die Referenzfläche 8) zu berühren. Hierbei genügt es, wenn auch nur ein Teil der Tastoberfläche 4 des Tastelementes 3 im Sichtfeld 9 des Detektors 5 positioniert ist. Der Detektor 5 und die Recheneinheit 6 der Kalibrationsvorrichtung 1 können daraus die genaue Position des auslenkbaren Tastelementes 3 ermitteln. Da das Koordinatenmesssystem mit der Werkzeugmaschinensteuerung 18 über die Leitung 19 verbunden ist, kann die Recheneinheit 6 der Kalibrationsvorrichtung 1 die Position (Koordinaten) des Einspannpunktes 17 des taktilen Messtaster 2 im Spannfutter 16 des Werkzeugkopfes abrufen und zusammen mit der ermittelten Position (bzw. deren Koordinaten) des Tastelementes 3 die genaue Länge und Grösse des eingespannten Messtasters 2 ermitteln. Die Recheneinheit berücksichtigt hierbei natürlich auch die Grösse des eigentlichen Tastelementes 3 (im Normalfall den Radius des kalottenförmigen Tastelementes).

Nachdem damit die Grösse bzw. Länge des eingespannten Messtasters 2 in unbelastetem Zustand (d.h. ohne Auslenkung des Tastelementes) ermittelt ist, wird für die Kalibrierung die eigentliche Tastauslenkung I_{Tr} des Tastelementes 3 gemessen. Siehe hierzu die Detailansicht in Figur 2. Der taktile Messtaster 2 besitzt einen elektromechanischen Sensor (nicht dargestellt), welcher auf die Auslenkung des Tastelementes 3 reagiert bzw. ein Signal abgibt zur Signalisierung einer stattgefundenen Berührung mit einem Gegenstand (das Signal kann beispielsweise elektrisch, optisch oder ein Infrarot-Signal sein). Die eigentliche Auslenkung des Tastelementes 3 erfolgt normalerweise an der Basis des Messtasters 2 (beim Einspannpunkt 17 des Messtasters 2), wo sich auch der elektromechanischen Sensor befindet (nicht dargestellt). Das Signal wird vom Sensor jedoch erst ausgelöst, wenn das Tastelement 3 eine bestimmte Auslenkung I_{Tr} erfahren hat (vergleiche mit gestrichelter Darstellung der ursprünglichen Position des Tastelementes 3). Für die Messung der Tastauslenkung l_{Tr} wird der Messtaster 2 mit dem auslenkbaren Tastelement 3 durch langsame Bewegung des Werkzeugkopfes 12 in Richtung Referenzfläche 8 bewegt, bis der Messtaster 2 bzw. sein Sensor der Kalibrationsvorrichtung 1 oder dem Koordinatenmesssystem eine Berührung des Tastelementes 3 mit der Referenzfläche 8 signalisiert und diese der Maschinensteuerung ein Stopp-Signal sendet, damit jede weitere Bewegung des taktilen Messtasters 2 unterbunden wird. Damit ist das Tastelement 3 in Richtung der Längsachse 14 um die Tastauslenkung l_{Tr} ausgelenkt und in diesem Zustand kann die Tastauslenkung l_{Tr} des Tastelementes 2 nun (mit dem Detektor 5) gemessen werden. Wieder genügt es, wenn nur ein relevanter Teil der Tastoberfläche 4 des Tastelementes 3 im Sichtfeld 9 des Detektors 5 positioniert ist. Der Detektor 5 und die Recheneinheit 6 ermitteln daraus die genaue Position bzw. Koordinaten des um den Betrag l_{Tr} ausgelenkten Tastelementes 3. Dann wird ein weiteres Mal die Position (bzw. Koordinaten) des Einspannpunktes 17 des taktilen Messtaster 2 im Spannfutter 16 des Werkzeugkopfes 12 abgerufen und daraus die Länge des Messtasters 2 bei signalauslösender Tastauslenkung I_{Tr} errechnet. Aus der Differenz der beiden gemessenen Messtasterlängen bestimmt die erfindungsgemässe Kalibrationsvorrichtung 1 bzw. das Koordinatenmesssystem den Wert für die Tastauslenkung l_{Tr} und speichert diesen Wert ab (z.B. in der Recheneinheit) und/oder übermittelt diesen der Maschinensteuerung. Die Kalibrierung der Tastauslenkung l_{Tr} des Messtasters 2 ist damit abgeschlossen. In der Figur 2 stellen die gestrichelten Linien das Tastelement 3 bzw. den Messtaster 2 im Übrigen in Ruhestellung, d.h. in unausgelenkter Stellung dar.

Bei der anschliessenden Koordinatenbestimmung von Messpunkten, z.B. am eingespannten Werkstück, wird die gemessene Tastauslenkung I_{Tr} immer berücksichtigt.

Die Tastauslenkung bzw. Kalibration sollte für jeden Messtaster individuell durchgeführt werden, da der Wert I_{Tr} für jeden taktilen Messtaster unterschiedlich sein kann. Die Tastauslenkung I_{Tr} bleibt bei normalem Gebrauch für jeden Messtaster unverändert und braucht nur von Zeit zu Zeit überprüft werden.

Wird der Messtaster 2 erneut im Spannfutter 17 des Werkzeugkopfes 12 eingespannt, ist es jedoch empfehlenswert den ersten oben genannten Schritt zu wiederholen, d.h. die Position des auslenkbaren Tastelementes 3 neu zu kalibrieren. Gründe hierfür sind: Der Messtaster 2 könnte im Spannfutter 16 nicht mehr die exakt gleiche Position aufweisen, wie bei der ersten Kalibration oder der Messtaster 2 - oder die Werkzeugmaschine - haben eine leicht andere Temperatur als bei der ursprünglichen Kalibration. Da die Tastauslenkung I_{Tr} ein sehr kleiner Wert ist, bleibt dessen Betrag selbst bei einer geänderten Messtaster- oder Maschinentemperatur praktisch gleich.

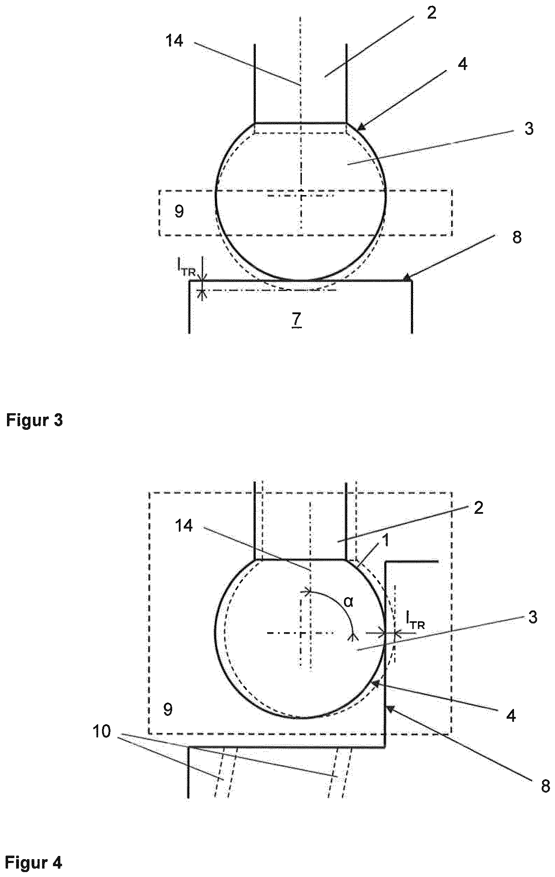

Die Figur 3 zeigt denselben taktilen Messtaster 2 aus der vorangehenden Figur 2. Wie man der Figur 3 entnehmen kann, erfasst das Sichtfeld 9 des Detektors aber nicht das gesamte Tastelement 3, sondern nur einen Teil seiner Tastoberfläche 4. Auch nur ein Teil des Tastelementes 3 genügt der erfindungsgemässen Kalibrationsvorrichtung um die exakte Position des Tastelementes 3 zu bestimmen. Dies ist insbesondere von Vorteil, weil damit weder das Referenzelement 7 noch dessen Referenzfläche 8 genauestens definiert oder positioniert werden muss. Hierbei kann die Referenzfläche 8 sogar ungenau definiert sein (z.B. uneben oder rau). D.h. das ausgelenkte Tastelement 3 muss im Gegensatz zum Stand der Technik nicht in einer ganz bestimmten Position zu liegen kommen, damit die Tastauslenkung l_{Tr} des Messtasters korrekt gemessen werden kann. Der erfindungsgemässen Vorrichtung genügt als Anforderung, dass die Referenzoberfläche 8 nahe genug am Sichtfeld 9 des Detektors positioniert ist, dass bei signalauslösender Berührung mindestens ein Teil der Tastoberfläche 4 im Sichtfeld 9 des Detektors zu liegen kommt.

Die Figur 4 zeigt eine weitere denkbare Ausführungsform der erfindungsgemässen Kalibrationsvorrichtung, bei welcher ein taktiler Messtaster 2 nicht nur in seiner Längsrichtung 14 ausgelenkt und kalibriert werden kann, sondern auch senkrecht dazu. Diese Ausführungsform setzt natürlich voraus, dass nicht nur der Messtaster 2, sondern auch die Kalibrationsvorrichtung entsprechend eingerichtet ist. Wie die Figur darstellt, wird hier eine Tastauslenkung I_{Tr} gemessen, welche seitlich bzw. senkrecht zur Längsachse 14 des Messtasters 2 stattfindet.

Selbstverständlich ist es gemäss vorliegender Erfindung auch denkbar, dass ein Messtaster bzw. sein Tastelement kombiniert sowohl in Richtung der Längsachse 14, wie auch senkrecht dazu (gemäss Figur 4) ausgelenkt werden kann. Die Messung mit dem Messtaster kann dadurch auch in einer beliebig geneigten Richtung zur zu messenden Oberfläche erfolgen. Der in der Figur 4 aufgeführte Winkel α kann daher einen anderen Betrag als 90° betragen. Vorzugsweise hat der Winkel α einen Wert von 90° bis 180°.

Um Verschmutzungen vorzubeugen, kann in einer weiteren bevorzugten Ausführungsform die Referenzfläche 8 mit Düsen (10) ausgestattet sein, welche die Referenzfläche selbst oder das Tastelement vor einer weiteren Messung mit Druckluft oder einer Reinigungsflüssigkeit reinigen.

Die Erfindung betrifft somit sowohl eine Kalibrationsvorrichtung, wie auch ein Koordinatenmesssystem mit der Kalibrationsvorrichtung und auch ein zugehöriges Messverfahren für die Messung der signalauslösenden Tastauslenkung l_{Tr} von taktilen Messtastern. Der taktile Messtaster weist ein auslenkbares Tastelement mit einer Tastoberfläche auf. Das auslenkbare Tastelement ist beispielsweise kugel- oder kalottenförmig ausgeführt und an einem Stift befestigt. Meist ist das Tastelement zusammen mit dem Stift an der Basis, d.h. Fuss des Messtasters, auslenkbar. Die Kalibrationsvorrichtung weist im Weiteren einen Detektor, vorzugsweise eine Kamera oder ein Laservermessungsgerät, auf. Der Detektor besitzt ein Sichtfeld, welches zur Erfassung der Tastoberfläche des Tastelementes gedacht ist. Im Weiteren weist die erfindungsgemässe Vorrichtung ein Referenzelement mit einer Referenzfläche und eine Recheneinheit auf.

Gemäss der Erfindung ist die Referenzfläche des Referenzelementes derart zum Sichtfeldes des Detektors angeordnet, dass bei einer signalauslösenden Berührung der Tastoberfläche des Tastelementes mit der Referenzfläche - d.h. der berührungsempfindliche Sensor gibt ein einsprechendes Signal ab - die Tastoberfläche oder Teile der Tastoberfläche im Sichtfeld des Detektors liegen. Da die Messtaster und deren Tastelemente vorgegebene und bekannte Grössen besitzen, lässt sich die Referenzfläche und das Sichtfeld ohne weiteres zueinander positionieren. Der Detektor ist mit einer Recheneinheit der Kalibrationsvorrichtung verbunden, so dass aus dem detektierten Teil der Tastoberfläche die genaue Position des Tastelementes berechnet werden kann. Denkbar wäre auch, dass im Detektor eine Recheneinheit integriert ist und die Position direkt berechnet. Denkbar wäre auch, dass die Kalibrationsvorrichtung mit der Maschinensteuerung verbunden ist und die Maschinensteuerung die Position des Tastelementes berechnet. Die Funktion der Recheneinheit können daher auch andere Elemente, z.B. ausserhalb der Kalibrationsvorrichtung einnehmen.

Weil der Detektor anhand eines Teiles der erfassten Tastoberfläche die Position des Tastelementes ermittelt, kann sich das Referenzelement oder dessen Referenzfläche innerhalb aber auch ausserhalb des Detektionsbereiches bzw. Sichtfeldes des Detektors befinden.

Vorzugsweise ist das Referenzelement mit einer oder mit mehreren Düsen ausgestattet, welche der Reinigung dienen. Bevorzugt sind die Düsen auf die Referenzfläche ausgerichtet. Zur Reinigung werden die Düsen mit Druckluft oder einer Reinigungsflüssigkeit beaufschlagt. Die Düsen können so ausgerichtet sein, dass diese die Referenzfläche und/oder die Oberfläche des Tastelementes reinigen.

Das Tastelement oder deren Tastoberfläche kann kugel- oder kalottenförmig ausgebildet sein.

Nach eine weiteren bevorzugten Ausführungsform kann die Kalibrationsvorrichtung zusätzlich auch die Position von Werkzeugen, insbesondere Fräswerkzeuge, erfassen und berechnen. Hierbei erfasst der Detektor die Oberfläche bzw. Umrisse des Werkzeuges und ermittelt daraus deren genaue Position.

Die Erfindung umfasst nicht nur die eigentliche Kalibrationsvorrichtung sondern auch ein damit ausgestattetes Koordinatenmesssystem für Werkzeugmaschinen. Das Koordinatenmesssystem weist eine erfindungsgemässe Kalibrationsvorrichtung und einen taktilen Messtaster mit einem auslenkbaren Tastelement auf, welcher an einem Werkzeugkopf der Werkzeugmaschine einspannbar ist.

Der Messtaster kann in einer weiteren Variante der Erfindung derart konstruiert sein, dass die signalauslösende Tastauslenkung l_{Tr} des Tastelementes in unterschiedlichen Richtungen zur Messtaster-Längsachse stattfinden kann. So kann die Tastauslenkung parallel oder fluchtend mit der Messtaster-Längsachse geschehen, in einem rechten Winkel dazu (d.h. senkrecht) oder in einer beliebigen zur Längsachse des Messtasters um einen Winkel α geneigten Richtung erfolgen. Des Weiteren kann das Tastelement auf Druck oder auf Zug auslenkbar sein.

Die vorgesehene Recheneinheit kann anhand der vom Detektor ermittelten Position des Tastelementes und der Position des Werkzeugkopfes die signalauslösende Tastauslenkung I_{Tr} des Tastelementes berechnen.

Zur Erfindung gehört auch ein erfindungsgemässes Messverfahren für die Messung der signalauslösenden Tastauslenkung l_{Tr} des Messtasters. Hierfür wird zunächst das Tastelement des Messtasters mit der Referenzfläche des Referenzelementes derart in Berührung gebracht, dass das Berührungssignal ausgelöst wird. In einem weiteren Schritt ermittelt das Koordinatenmesssystem anschliessend anhand der vorbekannten Länge des Messtasters, sowie aus der Position des Einspannpunktes des Messtasters am Werkzeugkopf und der vom Detektor und der Recheneinheit der Kalibrationsvorrichtung ermittelten Position des Tastelementes die Tastauslenkung l_{Tr} des Messtasters. Die Länge des Messtasters wird vorzugsweise vor der eigentlichen Messung der Tastauslenkung gemessen oder wird in die Recheneinheit der Kalibrationsvorrichtung eingegeben.

Wird die Länge des Messtasters gemessen, kann vor der Messung der signalauslösenden Tastauslenkung l_{Tr} die Länge des Messtasters wie folgt ermittelt werden: Die Tastoberfläche oder Teile der Tastoberfläche des Tastelementes werden ins Sichtfeld des Detektors gebracht, dies ohne dass das Tastelement dabei andere Gegenstände berührt. Der Detektor und die Recheneinheit berechnen aus dem detektierten Teil der Tastoberfläche die genaue Position des Tastelementes. Anschliessend ermittelt die Recheneinheit anhand der detektierten Position des Tastelementes und der Position des Einspannpunktes des Messtasters am Werkzeugkopf der Werkzeugmaschine die Länge des Messtasters. Die Position bzw. die Koordinaten des Einspannpunktes des Messtasters am Werkzeugkopf der Werkzeugmaschine werden der Recheneinheit z.B. von der Maschinensteuerung der Werkzeugmaschine elektronisch übermittelt. Die Recheneinheit ist daher vorzugsweise mit der Werkzeugmaschinensteuerung verbunden.

In einer besonders bevorzugten Variante des erfindungsgemässen Messverfahrens, wird die Position des auslenkbaren Tastelementes jeweils neu kalibriert bzw. eingemessen, wenn der Messtaster in das Spannfutter des Werkzeugkopfes für eine neue Messung erneut eingespannt wird. Dies erhöht die Präzision der folgenden Messungen. Hierbei wird bei einem Neueinspannen des Messtasters im Werkzeugkopf die Position des auslenkbaren Tastelementes neu erfasst. Für die folgenden Positionsmessungen greift das Koordinatenmesssystem dann auf die bereits gemessene und abgespeicherte Tastauslenkung I_{Tr}.

Die Erfindung umfasst auch eine Werkzeugmaschine, insbesondere Fräsmaschine oder Elektroerosionsmaschine, mit einem erfindungsgemäss funktionierenden Koordinatenmesssystem oder einer erfindungsgemässen Kalibrationsvorrichtung.

Die vorliegende Erfindung ist nicht auf die explizit genannten Möglichkeiten und Ausführungsformen beschränkt. Diese Varianten sind vielmehr als Anregung für den Fachmann gedacht, um die Erfindungsidee möglichst günstig umzusetzen.

Die Erfindung wird durch die Ansprüche definiert.

### Bezugszeichenliste

- 1: Kalibrationsvorrichtung
- 2: Taktile Messtaster
- 3: auslenkbares Tastelement
- 4: Tastoberfläche
- 5: Detektor, z.B. Kamera- oder Laservermessungsgerät
- 6: Recheneinheit
- 7: Referenzelement
- 8: Referenzfläche
- 9: Detektionsbereich bzw. Sichtfeld des Detektors
- 10: Düse
- 11: Werkzeugmaschine
- 12: Werkzeugkopf
- 13: Externer Messpunkt
- 14: Längsachse Messtaster
- 15: Koordinatenmesssystem
- 16: Spannfutter Werkzeugkopf
- 17: Einspannpunkt des Messtasters
- 18: Werkzeugmaschinensteuerung
- 19: Leitung

## Patentansprüche

1. Kalibrationsvorrichtung (1) für die Messung der signalauslösenden Tastauslenkung I_{Tr} von einem an einem Werkzeugkopf eingespannten taktilen Messtaster (2), welche ein auslenkbares Tastelement (3) mit einer Tastoberfläche (4) besitzt, wobei die Kalibrationsvorrichtung (1) einen Detektor (5), vorzugsweise eine Kamera oder ein Laservermessungsgerät, mit einem Sichtfeld (9) zur Erfassung der Tastoberfläche (4) des Tastelementes (3), ein Referenzelement (7) mit einer Referenzfläche (8) und eine Recheneinheit (6) enthält, **dadurch gekennzeichnet, dass**
die Referenzfläche (8) des Referenzelementes (7) derart zum Sichtfeldes (9) des Detektors (5) angeordnet ist, dass bei einer signalauslösenden Berührung der Tastoberfläche (4) des Tastelementes (3) mit der Referenzfläche (8), die Tastoberfläche (4) oder Teile der Tastoberfläche (4) im Sichtfeld (9) des Detektors (5) liegen, wobei der Detektor (5) und die Recheneinheit (6) geeignet sind aus dem detektierten Teil der Tastoberfläche (4) die genaue Position des Tastelementes (3) zu berechnen, und die Recheneinheit weiter geeignet ist, um aus (a) der Position des Einspannpunktes (17) des Messtasters (2) am Werkzeugkopf (12) und (b) der berechneten Position des in einem ausgelenkten und signalauslösenden Zustand die Referenzfläche berührenden Tastelementes und (c) einer vorbekannten Länge des Messtasters (2) oder einer berechneten Position des nicht ausgelenkten Tastelementes (3) die signalauslösende Tastauslenkung zu berechnen.

2. Kalibrationsvorrichtung (1) nach Anspruch 1, wobei das Referenzelement (7) mit einer oder mit mehreren Düsen (10) ausgestattet ist, wobei die Düsen (10) vorzugsweise auf die Referenzfläche (8) ausgerichtet sind.

3. Kalibrationsvorrichtung (1) nach einem der vorangehenden Ansprüche,
**dadurch gekennzeichnet, dass** die Kalibrationsvorrichtung geeignet ist, um zusätzlich auch die Position von Werkzeugen, insbesondere Fräswerkzeuge, zu erfassen und zu berechnen.

4. Koordinatenmesssystem (15) für Werkzeugmaschinen (11), wobei das Koordinatenmesssystem (15) mit einer Kalibrationsvorrichtung (1) gemäss einem der vorangehenden Ansprüche und mit einem am Werkzeugkopf (12) der Werkzeugmaschine (11) einspannbaren taktilen Messtasters (2) mit einem auslenkbaren Tastelement (3) und einer dem Tastelement (3) zugeordneten Tastoberfläche (4) ausgestattet ist, wobei das Koordinatenmesssystem so gestaltet ist, dass die signalauslösende Tastauslenkung I_{Tr} des Tastelementes (3) in Richtung der Messtaster-Längsachse (14), senkrecht dazu, oder in einer zur Längsachse (14) um einen Winkel (α) geneigten Richtung erfolgt.

5. Koordinatenmesssystem (15) gemäss Anspruch 4, **dadurch gekennzeichnet, dass** das Tastelement (3) auf Druck oder Zug auslenkbar ist.

6. Koordinatenmesssystem (15) gemäss Anspruch 4 oder 5, **dadurch gekennzeichnet, dass** die Recheneinheit (6) geeignet ist, um anhand der vom Detektor (5) ermittelten Position des Tastelementes (3) und der Position des Werkzeugkopfes (12) die signalauslösende Tastauslenkung I_{Tr} des Tastelementes (3) zu berechnen.

7. Messverfahren für ein Koordinatenmesssystem (15) gemäss einem der Ansprüche 4 bis 6, **dadurch gekennzeichnet, dass** zur Messung der signalauslösenden Tastauslenkung I_{Tr} des Messtasters (2) zunächst das Tastelement (3) des Messtasters (2) mit der Referenzfläche (8) des Referenzelementes (7) derart in Berührung gebracht wird, dass das Berührungssignal ausgelöst wird, wonach das Koordinatenmesssystem (15) anhand der vorbekannten Länge des Messtasters (2), sowie aus der Position des Einspannpunktes (17) des Messtasters (2) am Werkzeugkopf (12) und der vom Detektor (5) und der Recheneinheit (6) der Kalibrationsvorrichtung (1) ermittelten Position des in einem ausgelenkten und signalauslösenden Zustand die Referenzfläche berührenden Tastelementes (3) die Tastauslenkung I_{Tr} des Messtasters (2) berechnet.

8. Messverfahren für ein Koordinatenmesssystem (15) gemäss Anspruch 7,
**dadurch gekennzeichnet, dass** vor der Messung der signalauslösenden Tastauslenkung I_{Tr} die Länge des Messtasters (2) dadurch ermittelt wird,
dass die Tastoberfläche (4) oder Teile der Tastoberfläche (4) des Tastelementes (3) ins Sichtfeld (9) des Detektors (5) positioniert werden, ohne dass das Tastelement (3) dabei andere Gegenstände berührt,
der Detektor (5) und die Recheneinheit (6) aus dem detektierten Teil der Tastoberfläche (4) die genaue Position des Tastelementes (3) berechnet und dass die Recheneinheit (6) anhand dieser ermittelten Position des Tastelementes (3) und der Position des Einspannpunktes (17) des Messtasters (2) an Werkzeugkopfes (12) die Länge des Messtasters (2) berechnet.

9. Messverfahren für ein Koordinatenmesssystem (15) gemäss Anspruch 7 oder8, **dadurch gekennzeichnet, dass** bei einem Neueinspannen des Messtasters (2) im Werkzeugkopf (12) die Position des auslenkbaren Tastelementes (3) neu erfasst wird.

10. Werkzeugmaschine (11), insbesondere Fräsmaschine oder Elektroerosionsmaschine, mit einem Koordinatenmesssystem (15) gemäss einem der Ansprüche 4 bis 6 oder einer Kalibrationsvorrichtung (1) gemäss einem der Ansprüche 1 bis 3.

## Claims

1. Calibration device (1) for measuring the signal-inducing sensing deflection l_{Tr} of a tactile measuring probe (2) which is clamped on a tool head and has a deflectable sensing element (3) having a sensing surface (4), the calibration device (1) containing a detector (5), preferably a camera or a laser measuring instrument, having a field of view (9) for detecting the sensing surface (4) of the sensing element (3), a reference element (7) having a reference surface (8), and a calculation unit (6), **characterized in that**
the reference surface (8) of the reference element (7) is arranged with respect to the field of view (9) of the detector (5) in such a way that, in the event of signal-inducing contact of the sensing surface (4) of the sensing element (3) with the reference surface (8), the sensing surface (4) or parts of the sensing surface (4) lies or lie in the field of view (9) of the detector (5), the detector (5) and the calculation unit (6) being suitable for calculating the precise position of the sensing element (3) from the detected part of the sensing surface (4) and the calculation unit further being suitable for calculating the signal-inducing sensing deflection from (a) the position of the clamping point (17) of the measuring probe (2) on the tool head (12) and (b) the calculated position of the sensing element which in a deflected and signal-inducing state touches the reference surface and (c) a length, known in advance, of the measuring probe (2) or a calculated position of the nondeflected sensing element (3).

2. Calibration device (1) according to Claim 1, wherein the reference element (7) is equipped with one or more nozzles (10), the nozzles (10) preferably being oriented towards the reference surface (8).

3. Calibration device (1) according to either of the preceding claims, **characterized in that**, in addition, the calibration device is also suitable for detecting and calculating the position of tools, in particular milling tools.

4. Coordinate measuring system (15) for machine tools (11), with the coordinate measuring system (15) being equipped with a calibration device (1) according to any one of the preceding claims and with a tactile measuring probe (2), which can be clamped on the tool head (12) of the machine tool (11) and has a deflectable sensing element (3) and a sensing surface (4) assigned to the sensing element (3), the coordinate measuring system being designed so that the signal-inducing sensing deflection I_{Tr} of the sensing element (3) takes place in the direction of the measuring probe longitudinal axis (14), perpendicularly thereto, or in a direction inclined by an angle (α) with respect to the longitudinal axis (14).

5. Coordinate measuring system (15) according to Claim 4, **characterized in that** the sensing element (3) is deflectable by compression or traction.

6. Coordinate measuring system (15) according to Claim 4 or 5, **characterized in that** the calculation unit (6) is suitable for calculating the signal-inducing sensing deflection l_{Tr} of the sensing element (3) with the aid of the position of the sensing element (3), determined by the detector (5), and the position of the tool head (12).

7. Measurement method for a coordinate measuring system (15) according to any one of Claims 4 to 6, **characterized in that**, in order to measure the signal-inducing sensing deflection l_{Tr} of the measuring probe (2), the sensing element (3) of the measuring probe (2) is initially brought in contact with the reference surface (8) of the reference element (7) in such a way that the contact signal is initiated, following which the coordinate measuring system (15) calculates the sensing deflection l_{Tr} of the measuring probe (2) with the aid of the length, known in advance, of the measuring probe (2) and from the position of the clamping point (17) of the measuring probe (2) on the tool head (12) and the position, determined by the detector (5) and the calculation unit (6) of the calibration device (1), of the sensing element (3) which in a deflected and signal-inducing state touches the reference surface.

8. Measurement method for a coordinate measuring system (15) according to Claim 7, **characterized in that**, before the measurement of the signal-inducing sensing deflection l_{Tr}, the length of the measuring probe (2) is determined by the sensing surface (4) or parts of the sensing surface (4) of the sensing element (3) being positioned in the field of view (9) of the detector (5), without the sensing element (3) touching other objects in the process, the detector (5) and the calculation unit (6) calculating the precise position of the sensing element (3) from the detected part of the sensing surface (4), and the calculation unit (6) calculating the length of the measuring probe (2) with the aid of this determined position of the sensing element (3) and the position of the clamping point (17) of the measuring probe (2) on the tool head (12).

9. Measurement method for a coordinate measuring system (15) according to Claim 7 or 8, **characterized in that** the position of the deflectable sensing element (3) is detected again when the measuring probe (2) is re-clamped in the tool head (12).

10. Machine tool (11), in particular milling machine or electrical discharge machine, having a coordinate measuring system (15) according to any one of Claims 4 to 6 or a calibration device (1) according to any one of Claims 1 to 3.

## Revendications

1. Dispositif d'étalonnage (1) destiné à mesurer la déviation de palpage à déclenchement de signal I_{Tr} à partir d'un palpeur de mesure tactile (2) qui est encastré au niveau d'une tête d'outil et qui possède un élément de sonde (3) qui peut être dévié et qui est pourvu d'une surface de palpage (4), le dispositif d'étalonnage (1) contenant un détecteur (5), de préférence une caméra ou un appareil de mesure à laser, pourvu d'un champ de vision (9) destiné à détecter la surface de palpage (4) de l'élément de palpage (3), un élément de référence (7) pourvu d'une surface de référence (8) et une unité de calcul (6), **caractérisé en ce que**
la surface de référence (8) de l'élément de référence (7) est disposée par rapport au champ de vision (9) du détecteur (5) de telle sorte que, lorsque la surface de palpage (4) de l'élément de palpage (3) est en contact avec la surface de référence (8) de manière à déclencher un signal, la surface de palpage (4) ou des parties de la surface de palpage (4) se trouvent dans le champ de vision (9) du détecteur (5), le détecteur (5) et l'unité de calcul (6) étant adaptés pour calculer la position exacte de l'élément de palpage (3) à partir de la partie détectée de la surface de palpage (4), et l'unité de calcul étant en outre adaptée pour calculer la déviation de palpage à déclenchement de signal à partir de (a) la position du point d'encastrement (17) du palpeur de mesure (2) au niveau de tête d'outil (12) et (b) la position calculée de l'élément de palpage en contact avec la surface de référence dans un état dévié et de déclenchement de signal et (c) une longueur préalablement connue du palpeur de meure (2) ou une position calculée de l'élément de palpage non dévié (3).

2. Dispositif d'étalonnage (1) selon la revendication 1, l'élément de référence (7) étant équipé d'une ou plusieurs buses (10), les buses (10) étant de préférence orientées vers la surface de référence (8).

3. Dispositif d'étalonnage (1) selon l'une des revendications précédentes, **caractérisé en ce que** le dispositif d'étalonnage est approprié pour détecter et à calculer en outre également la position d'outils, notamment de outils de fraisage.

4. Système de mesure de coordonnées (15) destiné à des machines-outils (11), le système de mesure de coordonnées (15) étant équipé d'un dispositif d'étalonnage (1) selon l'une des revendications précédentes et d'un palpeur de mesure tactile (2) qui peut être encastré au niveau de la tête d'outil (12) de la machine-outil (11) et qui comprend un élément de palpage (3) qui peut être dévié et qui comporte une surface de palpage (4) associée à l'élément de palpage (3), le système de mesure de coordonnées étant conçu de manière à ce que la déviation de palpage à déclenchement de signal I_{Tr} de l'élément de palpage (3) soit effectuée en direction de l'axe longitudinal (14) du palpeur de mesure, perpendiculairement à celui-ci, ou dans une direction inclinée d'un angle (α) par rapport à l'axe longitudinal (14) .

5. Système de mesure de coordonnées (15) selon la revendication 4, **caractérisé en ce que** l'élément de palpage (3) peut être dévié en réponse à une pression ou une traction.

6. Système de mesure de coordonnées (15) selon la revendication 4 ou 5, **caractérisé en ce que** l'unité de calcul (6) est appropriée pour calculer la déviation de palpage à déclenchement de signal I_{Tr} de l'élément de palpage (3) sur la base de la position de l'élément de palpage (3) déterminée par le détecteur (5) et de la position de la tête d'outil (12).

7. Procédé de mesure d'un système de mesure de coordonnées (15) selon l'une des revendications 4 à 6, **caractérisé en ce que**, pour mesurer la déviation de palpage à déclenchement de signal I_{Tr} du palpeur de mesure (2), l'élément de palpage (3) du palpeur de mesure (2) est tout d'abord amené en contact avec la surface de référence (8) de l'élément de référence (7) de manière à déclencher le signal de contact, puis le système de mesure de coordonnées (15) calcule la déviation de palpage I_{Tr} du palpeur de mesure (2) sur la base de la longueur préalablement connue du palpeur de mesure (2) et à partir de la position du point d'encastrement (17) du palpeur de mesure (2) au niveau de la tête d'outil (12) et de la position, déterminée par le détecteur (5) et l'unité de calcul (6) du dispositif d'étalonnage (1), de l'élément de palpage (3) en contact avec la surface de référence dans un état dévié et de déclenchement de signal.

8. Procédé de mesure d'un système de mesure de coordonnées (15) selon la revendication 7, **caractérisé en ce que**, avant de mesurer la déviation de palpage à déclenchement de signal I_{Tr}, la longueur du palpeur de mesure (2) est déterminée **en ce que** la surface de palpage (4) ou des parties de la surface de palpage (4) de l'élément de palpage (3) sont positionnées dans le champ de vision (9) du détecteur (5) sans que l'élément de palpage (3) ne vienne en contact avec d'autres objets, le détecteur (5) et l'unité de calcul (6) calculent la position exacte de l'élément de palpage (3) à partir de la partie détectée de la surface de palpage (4) et **en ce que** l'unité de calcul (6) calcule la longueur du palpeur de mesure (2) sur la base de cette position déterminée de l'élément de palpage (3) et de la position du point d'encastrement (17) du palpeur de mesure (2) au niveau de la tête d'outil (12).

9. Procédé de mesure destiné à un système de mesure de coordonnées (15) selon la revendication 7 ou 8, **caractérisé en ce que**, lorsque le palpeur de mesure (2) est à nouveau encastré dans la tête d'outil (12), la position de l'élément de palpage (3) pouvant être dévié est à nouveau déterminée.

10. Machine-outil (11), notamment fraiseuse ou machine d'électroérosion, comprenant un système de mesure de coordonnées (15) selon l'une des revendications 4 à 6 ou un dispositif d'étalonnage (1) selon l'une des revendications 1 à 3.
